# FASCICULE DE BREVET EUROPEEN

(11) **EP 2 375 087 B1**
(45) Date de publication et mention de la délivrance du brevet: **27.06.2012**
(21) Numéro de dépôt: 11305339.1
(22) Date de dépôt: 28.03.2011
(51) Int. Cl.: F16B 13/14

(54) **Dispositif de fixation dans des matériaux creux d'éléments de construction pour batîment**
Vorrichtung zur Befestigung von Baukonstruktionselementen in hohlen Materialien
Device for fixing construction elements for building in hollow material

(30) Priorité: 09.04.2010 FR 1052711
(43) Date de publication de la demande: 12.10.2011
(73) Titulaire: SARL François Inglese, 43000 Le Puy en Velay (FR)
(72) Inventeur: Inglese, François, 43120, MONISTROL (FR)
(74) Mandataire: Dupuis, François

(56) Documents cités:
- EP-A1- 1 441 133
- DE-A1- 3 409 373
- DE-A1-102004 020 118

## Description

L'invention se rattache au secteur technique des dispositifs de fixation utilisés pour positionner des éléments de construction dans des bâtiments sur des parois ou murs constitués dans des matériaux creux du type brique ou parpaing.

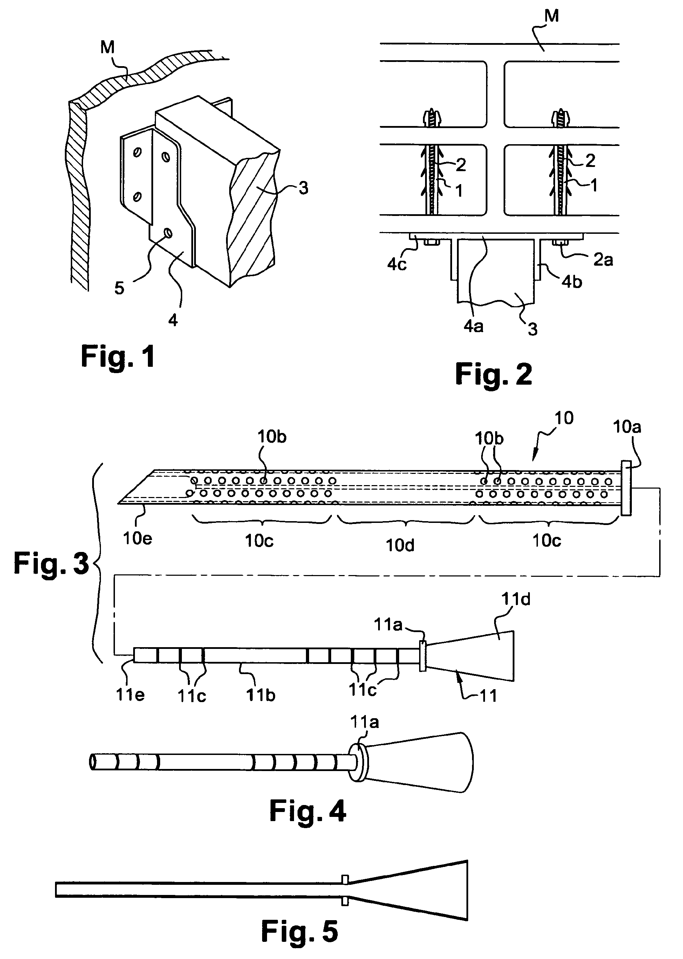

On connaît déjà l'utilisation notamment de chevilles pour la fixation par exemple de sabot de charpente venant se positionner contre des murs cloisons ou similaires en parpaing ou brique. Ces derniers sont constitués de manière classique avec des lames parallèles définissant entre elles des alvéoles. On utilise par exemple comme représentées aux figures 1 et 2 des chevilles en matériau plastique de grande longueur qui sont susceptibles de prendre appui sur les parois des lames de parpaing ou brique percés préalablement à cet effet. Ces chevilles sont susceptibles de recevoir des tires-fonds filetés sur toute leur longueur. Une telle disposition était décrite dans le brevet français 2800812 du Demandeur lequel fait l'objet d'une large exploitation. En se référant aux figures 1 et 2, on a ainsi représenté par (M) un moellon, par (1) une cheville, par (2) un tire-fond, ce dernier présentant une tête (2-a) de vissage. On a également représenté un chevron par (3) lequel vient se positionner et se fixer sur un sabot de charpente (4) susceptible de prendre appui par une base plane (4-a) contre la face en regard du moellon. Le sabot de charpente comprend en outre deux ailes perpendiculaires à la base plane entre lesquelles est disposé le chevron maintenu ultérieurement par des vis de fixation (5). Le sabot de charpente (4) comprend au-delà de ses ailes des prolongements (4-c) permettant l'appui de la tête (2-a) des tires-fonds (2).

Le problème posé réside dans la difficulté en pratique pour l'opérateur qui est sur le terrain à positionner correctement le sabot de charpente (4). En effet, l'opérateur doit présenter le sabot de charpente destiné à recevoir le chevron de charpente afin de repérer le positionnement d'un premier trou à effectuer. Il doit ensuite retirer le sabot de charpente et faire le trou. Il doit refaire cette manipulation pour chacun des trous à exécuter c'est-à-dire au total quatre pour la fixation du sabot de charpente. Cette opération est loin d'être pratique et très souvent la qualité des perçages et leur fiabilité en position reste très aléatoire car il y a très peu de précision.

On connaît par ailleurs l'utilisation de filtres formant grille dans lesquels est introduite une résine chimique à l'aide d'une canule. Cette résine s'expanse dans le filtre-grille et vient s'ajuster sur les parties interne et externe et dans les parois intérieures des lames constitutives du parpaing et brique. Il est ensuite nécessaire d'introduire des tiges filetées et rondelles qui sont susceptibles de recevoir chacune un écrou de blocage. Ces filtres-grilles sont en matériaux plastique ou métallique et sont déformables de par leur structure de grille. Il se pose alors des problèmes de rigidité. En outre, la résine projetée par la canule s'expanse à travers toutes les mailles de la grille avec un gaspillage substantiel dans les zones correspondant aux alvéoles du parpaing ou brique qui n'ont pas besoin de cette matière. Avec ces filtres-grilles, il faut d'abord repérer les perçages, les effectuer, mettre les filtres-grilles dans les trous, injecter la résine, enfiler la tige filetée et attendre le séchage de la résine. Ces opérations sont à effectuer quatre fois pour ensuite mettre le sabot de charpente.

De tels filtres-grilles sont exploités par le Demandeur qui en connaît parfaitement les conditions d'utilisation de pose et leurs limites.

On connaît par le brevet DE 10 2004 020118 A1 un moyen d'ancrage (« Anker ») qui pénètre en totalité dans l'alésage récepteur d'un corps, sans aucun débordement comme décrit et illustré aux dessins. Ce moyen d'ancrage assure une seule fonction qui est de recevoir une canule pour une injection de résine. Ce document est également représentatif de l'état de la technique.

On connaît par le document DE 34 09 373 A1 l'utilisation d'un repère (3), qui est en fait principalement utilisé comme point de rupture, et en aucun cas à identifier des distances d'injection à l'aide d'une canule. Ce document DE 34 09 373 concerne un moyen d'ancrage recevant un poinçon (2) dont l'extrémité en forme de tête (2b) se situe à l'intérieur du trou, et l'autre extrémité débordante est découpée par un outil de pose de rivets aveugles. Après tirage du poinçon, sa tête (2b) est disposée à l'intérieur du moyen d'ancrage.

La démarche du Demandeur à partir du problème posé à partir notamment du montage des sabots de charpente a été de réfléchir à la conception d'un nouveau dispositif de fixation qui soit simple à utiliser, qui soit pratique pour l'opérateur qui est sur le terrain, et permette un perçage et une fixation avec le sabot de charpente en position.

La démarche du Demandeur a aussi été de rechercher à réduire les coûts de fabrication, à éviter les gaspillages en relation avec le surplus de résine chimique insérée dans les filtres-grilles.

La solution apportée par le Demandeur répond parfaitement à ces objectifs et est d'une grande simplicité de conception et surtout pratique pour le montage par exemple du sabot de charpente.

Selon une première caractéristique de l'invention le dispositif de fixation est remarquable en ce qu'il comprend en combinaison un clou creux métallique de grande rigidité et de longueur correspondant pour s'adapter et se fixer dans des matériaux creux du type parpaing ou brique, le dit clou présentant une tête d'appui et étant perforé sur une ou des parties de sa longueur en laissant des espaces pleins, les dites perforations se situant autour des endroits où se trouvent les parois internes et externes du parpaing ou brique, et en ce que le dit clou est susceptible de recevoir une résine chimique injectée par une canule, la dite canule comprenant dans sa partie médiane une butée d'appui susceptible de venir en contact avec la tête du dit clou en engagement maximum, la dite canule présentant de part et d'autre de cette butée d'appui un prolongement cylindrique traversant le clou et étant muni de zones de repérages, et un prolongement conique en débordement du clou pour l'insertion de la résine.

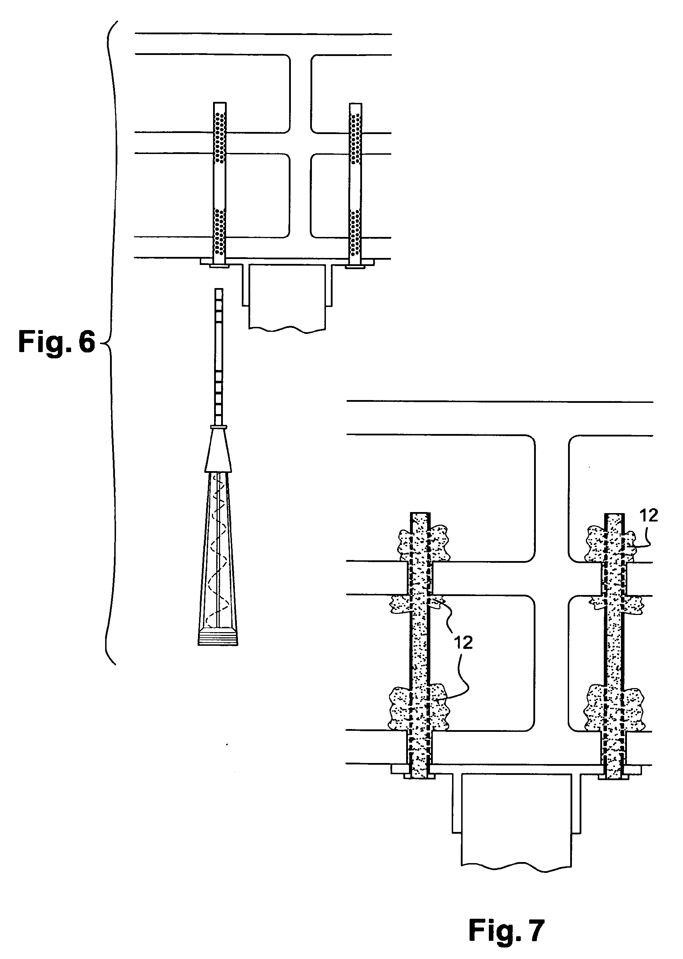

Ces caractéristiques et d'autres encore ressortirons bien de la suite de la description.
■ La figure 1 est un vue en perspective d'une fixation de sabot de charpente selon l'Art Antérieur,
■ La figure 2 est une vue en plan montrant la fixation d'un sabot de charpente selon l'Art Antérieur avec cheville et tire-fond,
■ La figure 3 est une vue avant montage du clou et de sa canule selon l'invention,
■ La figure 4 est une vue de la canule seule,
■ La figure 5 est une vue en coupe longitudinale de la canule,
■ La figure 6 est une vue illustrant le montage d'un sabot de charpente avec le dispositif de l'invention,
■ La figure 7 est une vue illustrant la fixation d'un sabot de charpente avec le dispositif de l'invention.

Afin de rendre plus concret l'objet de l'invention, on le décrit maintenant d'une manière non limitative illustré aux figures des dessins.

Le dispositif de fixation selon l'invention comprend en combinaison un clou (10) et une canule (11).

Le clou (10) est creux, métallique, de grande rigidité et de longueur correspondant pour s'adapter et se fixer dans des matériaux creux du type parpaing (M) ou brique. Le dit clou présente une tête d'appui (10-a) et est perforé avec une multitude de perforations (10-b) sur une ou des parties

(10-c) de sa longueur en laissant des espaces pleins (10-d). Les dites perforations (10-b) se situent autour des endroits où se trouvent les parois internes et externes du parpaing ou brique. A son extrémité arrière le clou présente une forme en biseau (10-e).

Le dit clou est susceptible de recevoir une résine chimique (12) injectée par la canule (11). La dite canule comprend dans sa partie médiane une butée d'appui (11-a) susceptible de venir en contact avec la tête (10-a) du dit clou en engagement maximum. On a ainsi la distance exacte pour la première injection de résine.

La dite canule présente de part et d'autre de cette butée (11-a) d'appui un prolongement cylindrique (11-b) traversant le clou et étant muni de zones de repérages (11-c) et un prolongement conique (11-d) en débordement du clou pour l'insertion de la résine par un moyen approprié comme représenté à titre non limitatif figure 6.

Les repères (11-c) ont pour fonction d'identifier le positionnement de la canule dans sa pénétration dans le clou et ainsi permettre à l'opérateur de projeter la résine en tenant compte des caractéristiques dimensionnelles du matériau creux récepteur.

Le moyen d'introduction de la résine dans la canule est de type connu. La projection de résine à travers la canule se fait après avoir positionnée et repérée la position de celle-ci par rapport au clou. La résine sort en extrémité (11-e) du clou pour pénétrer dans les perforations formées dans celui-ci. Ainsi la projection de résine s'effectue exclusivement dans les zones souhaitées d'appui du clou sur la ou les parois du parpaing ou brique, et aussi légèrement autour de celles-ci, et non sur la totalité de la surface du clou comme cela était connu sur les filtres grilles de l'Art Antérieur. La pose d'un sabot-charpente est par ailleurs simplifiée. L'opérateur repère le trou à effectuer à partir de la plaque de fixation du sabot de charpente. Il peut percer à travers le sabot de charpente et le parpaing récepteur et introduit un premier clou selon l'invention.

Après avoir percé le premier trou et assuré le positionnement du sabot de charpente et du premier clou, il lui suffit alors de percer les autres trous à travers la plaque du sabot de charpente aux autres endroits nécessaires et d'introduire les clous correspondants qui viennent faire plaquer par leur tête le sabot contre le parpaing ou brique. L'opérateur procède ensuite à l'injection de la résine par la canule.

Le dispositif de la présente demande concerne ainsi un dispositif de fixation sous forme d'un clou et possède de multiples fonctions :
- constituant un clou, il présente une tête d'appui (10-a) apte à jouer le rôle d'une zone de frappe pour enfoncer ledit dispositif de fixation dans un parpaing ou une brique à l'aide d'un marteau par exemple ;
- sa tête d'appui permet de contrôler l'enfoncement du dispositif de fixation, fonction qui n'est pas assurée par le dispositif du document DE 10 2004 020118.
- sa tête d'appui permet également de dispenser l'utilisation d'un boulon ou autres moyens de fixation pour venir fixer un sabot de charpente par exemple.
- le retrait de la canule dans la présente demande, en combinaison avec sa pluralité de repères, permet d'ajuster précisément, aux moyens des différents repères les distances d'injection précises.

En outre, selon l'invention, la canule comprend une collerette permettant un appui strict de celle-ci sur la tête d'appui du clou. Cette même collerette permet également de positionner la canule à la distance exacte, à l'intérieur du clou, pour la première injection de résine.

Les avantages ressortent bien de l'invention. On souligne la simplicité du dispositif avec un perçage à travers le sabot de charpente ce qui évite le démontage.

## Revendications

1. Dispositif de fixation dans des matériaux creux d'éléments de construction pour bâtiment comprenant en combinaison un clou (10) creux métallique de grande rigidité et de longueur correspondant pour s'adapter et se fixer dans des matériaux creux du type parpaing ou brique, le dit clou étant perforé sur une ou des parties de sa longueur en laissant des espaces pleins (10-d), les dites perforations (10-b) se situant autour des endroits où se trouvent les parois internes et externes du parpaing ou brique, et en ce que le dit clou est susceptible de recevoir une résine chimique (12) injectée par une canule (11), la dite canule comprenant dans sa partie médiane une butée d'appui (11-a) susceptible de venir en contact avec la tête du dit clou en engagement maximum, la dite canule présentant de part et d'autre de cette butée d'appui un prolongement cylindrique traversant le clou et un prolongement conique (11-d) en débordement du clou pour l'injection de la résine, **caractérisé en ce que** le dit clou présente une tête d'appui (10-a) et que le dit prolongement cylindrique est muni de zones de repérages (11-c).

2. Dispositif de fixation selon la revendication 1, **caractérisé** dans son application à la fixation des sabots de charpente.

## Claims

1. Device for clamping building components used in the construction industry in hollow materials including in combination a hollow metal nail (10) of great rigidity and corresponding length so that it can be fitted and clamped in hollow materials such as breezeblock or brick, said nail being perforated over one or more portions of its length leaving full spaces (10-d), said perforations (10-b) being situated around places where the internal and external walls of the breezeblock or brick are located, said nail being able to receive a chemical resin (12) injected via a cannula (11), said cannula including in the median part thereof a bearing stop (11-a) able to come into contact with the head of said nail in maximum engagement, said cannula having on either side of this bearing stop a cylindrical extension (11-b) passing through the nail and a conical extension (11-d) projecting from the nail for the injection of the resin, **characterised in that** said nail has a bearing head (10-a) and said cylindrical extension is provided with loacting zones (11-c).

2. Clamping device as claimed in claim 1, **characterised by** its application to the clamping of joist hangers.

## Patentansprüche

1. Vorrichtung zur Befestigung von Gebäudebauelementen in hohlen Baustoffen, bestehend aus einem sehr steifen hohlen Metallnagel (10) mit entsprechender Länge, um in hohlen Baustoffen vom Typ Hohlblockstein oder Backstein eingepasst und befestigt werden zu können, wobei der besagte Nagel unter Aussparung vollwandiger Bereiche (10-d) auf einem oder mehreren Teilen seiner Länge gelocht ist, wobei die besagten Lochungen (10-b) um die Stellen herum angeordnet sind, an denen sich die Innen- und Außenwände des Hohlblocksteins bzw. Backsteins befinden, wobei der besagte Nagel geeignet ist, ein chemisches Harz (12) aufzunehmen, das über eine Kanüle (11) eingespritzt wird, wobei die besagte Kanüle in ihrem mittleren Teil einen Anschlagnocken (11-a) umfasst, der geeignet ist, mit dem Kopf des maximal eingeführten Nagels in Kontakt zu kommen, wobei die Kanüle beiderseits dieses Anschlagnockens eine den Nagel durchquerende zylindrische Verlängerung (11-b) und ein über den Nagel vorstehendes konisches Verlängerungsstück (11-d) für die Einspritzung des Harzes aufweist, **dadurch gekennzeichnet, dass** der Nagel einen Anschlagkopf (10-a) aufweist und dass die besagte zylindrische Verlängerung mit Markierungszonen (11-c) versehen ist.

2. Befestigungsvorrichtung nach Anspruch 1, **dadurch gekennzeichnet, dass** sie für die Befestigung von Balkenschuhen angewandt wird.
